# EUROPÄISCHE PATENTSCHRIFT

(11) **EP 4 018 089 B1**
(45) Veröffentlichungstag und Bekanntmachung des Hinweises auf die Patenterteilung: **07.02.2024**
(21) Anmeldenummer: 20785428.2
(22) Anmeldetag: 06.07.2020
(51) Int. Cl.: F03D 1/06

(54) **ROTORBLATTANSCHLUSS MIT INSERT UND DEHNHÜLSE**
ROTOR BLADE CONNECTION WITH INSERT AND EXPANDABLE SLEEVE
RACCORD DE PALE DE ROTOR À INSERTS ET DOUILLE ÉLASTIQUE

(30) Priorität: 19.08.2019 DE 202019003517 U
(43) Veröffentlichungstag der Anmeldung: 29.06.2022
(73) Patentinhaber: Windnovation Engineering Solutions GmbH, 10489 Berlin (DE)
(72) Erfinder: SADOWSKI, Torsten, 14979 Großbeeren (DE)
(74) Vertreter: ETL IP Patent- und Rechtsanwaltsgesellschaft mbH
(86) Internationale Anmeldenummer: PCT/DE2020/000160
(87) Internationale Veröffentlichungsnummer: WO 2021/032230

(56) Entgegenhaltungen:
- DE-A1-102014 008 558

## Beschreibung

Die Erfindung betrifft einen Rotorblattanschluss, insbesondere für laminierte Rotorblätter an der Rotornabe von Windenergieanlagen unter Nutzung von in der Rotorblattwurzel angeordneten Inserts mit Dehnhülse, die mit Bolzen in axialer Richtung zum Rotorblatt verlaufend bei der Montage unter Vorspannung mit der Rotornabe oder einem Blattlager verbunden werden.

Ein Rotorblattanschluss mit einem Insert ist aus der DE 60 2004 008 070 T2 bekannt. Hier werden Inserts aus Metall, hochfestem Kunststoff oder aus Polymer-Verbundwerkstoffen von zylindrischer Form mit einem querschnittverjüngten Verlängerungsabschnitt in axialer Richtung zum Rotorblatt in der Rotorblattwurzel durch Verkleben angeordnet. Durch einen gewindefreien Abschnitt eingangsseitig in die Inserts werden die eingeschraubten Bolzen bei der Montage unter Zugspannung gesetzt und sorgen so für eine feste Verbindung mit der Rotornabe. Nachteilig ist, dass diese Form der Verbindung zu Stauchungen des Inserts führt.

Dieser Rotorblattanschluss wurde durch die DE 10 2014 008 558 A1 deshalb dahingehend verbessert, dass die Verbindung zwischen dem Bolzen und dem Insert über eine Dehnhülse hergestellt ist, und die Dehnhülse eine Verbindung mit dem Insert im blattwurzelendseitigen Bereich des Inserts aufweist. So können Stauchungen des Inserts ausgeschlossen werden. Die Dehnhülse stützt sich dabei innen im Insert auf einer fußseitigen Wulst des Inserts ab oder ist mit diesem verschraubt oder aus einem Stück mit dem Insert gefertigt. Das bedeutet, dass ein Teil des Querschnittes des Inserts für die Dehnhülse genutzt wird, was die Gestaltungsmöglichkeiten für die Dehnhülse einschränkt.

Aufgabe der Erfindung ist es, die Möglichkeiten der Dehnhülse für eine Verbesserung des Kräfteverhältnisses der Bolzenverbindung zu verbreitern, um so das Kräfteverhältnis auf den für die Betriebsdauer erforderlichen Wert optimal einzustellen. Des Weiteren wird die Fertigung des Inserts vereinfacht.

Gelöst wird diese Aufgabe mit den Merkmalen des Anspruches 1. Vorteilhafte Ausgestaltungen sind Gegenstand der Unteransprüche.

Für einen Rotorblattanschluss für ein Rotorblatt an einer Rotornabe oder einem Blattlager einer Windkraftanlage aufweisend eine Vielzahl von Inserts, die in axialer Richtung zum Rotorblatt und beabstandet zueinander im Blattwurzelbereich im Rotorblatt angeordnet sind und über die jeweils eine Verbindung zu einem entsprechenden Anschluss an der Rotornabe oder dem Blattlager unter Vorspannung mittels eines Bolzens herstellbar ist, wobei in der Verbindung zwischen dem Bolzen und dem verklebten Insert jeweils eine Dehnhülse angeordnet ist, wird erfindungsgemäß vorgeschlagen, dass sich in Richtung Blattspitze an einen Bereich des Inserts, der mit dem Rotorblattkörper verklebt ist, eine Dehnhülse anschließt, gefolgt von einem Innengewindeabschnitt zur Herstellung der Verbindung mit dem Bolzen.

Der verklebte Bereich des Inserts, die Dehnhülse und der Innengewindeabschnitt sind somit in Reihe angeordnet und können funktionsorientiert optimiert werden. So lässt sich z.B. durch eine Längenänderung der Dehnhülse das Kräfteverhältnis auf den für die Betriebsdauer erforderlichen Wert einstellen.

Für diese Reihenanordnung sind verschiedene Ausführungen vorgesehen.

So sieht eine erste Ausführung vor, dass die Dehnhülse und der Innengewindeabschnitt Bestandteil des Inserts sind. Das Insert muss dabei bezogen auf die Länge insbesondere den Außendurchmesser-bei einem zylindermantelförmigen Insert- ändern. Bei dünnwandigen Dehnhülsen kann dies im Innengewindeabschnitt zu Problemen führen. Deshalb wäre eine Verstärkung der Dehnhülse im Bereich des Innengewindeabschnitts vorzusehen.

Eine weitere Reihenanordnung wird erreicht, indem das Insert, die Dehnhülse und der Innengewindeabschnitt getrennte in axialer Richtung aufeinanderliegende Bauteile sind. Aufwendiger ist hier das Einlaminieren bei der Rotorblattherstellung.

Eine dritte Reihenanordnung wird erreicht, wenn die Dehnhülse Bestandteil des Inserts ist und der Innengewindeabschnitt sich in Richtung Blattspitze als gesondertes Bauteil anschließt.

Eine weitere Ausführung sieht vor, dass die Dehnhülse und der Innengewindeabschnitt ein Bauteil sind und sich in Richtung Blattspitze an das Inserts anschließen.

Damit die Dehnhülse zusammen mit dem Innengewindeabschnitt ihre Funktion erfüllen kann, darf kein Kontakt zwischen der Dehnhülse sowie dem Innengewindeabschnitt jeweils mit dem Rotorblattkörper bestehen. Beim Einlaminieren sind somit entsprechende Vorkehrungen zu treffen.

So ist vorgesehen, dass der Innengewindeabschnitt und die Dehnhülse außen mit einer Kappe versehen sind. Das Laminat erhält so keinen Kontakt mit der Dehnhülse und dem Innengewindeabschnitt.

Querschnittsverjüngungen im Bereich der Dehnhülse können durch die Kappe ausgeglichen werden.

Vorteilhafterweise bestehen die Kappe aus einem nachgiebigen Material z.B. aus einem entsprechenden Kunststoff.

Zur Erzielung der erforderlichen Festigkeit der Klebeverbindung zwischen Insert und Rotorblattkörper ist es vorteilhaft, wenn das Insert im Bereich der Verklebung mit dem Rotorblattkörper außen Erhebungen und/oder Vertiefungen aufweist.

Bei der oben ausgeführten ersten Ausführung der Reihenanordnung ist es vorteilhaft, wenn der Bereich des Überganges zwischen dem verklebten Bereich des Inserts und der Dehnhülse als Bestandteil des Inserts entsprechend den Anforderungen aus der Verklebung und der Festigkeit des Inserts ausgebildet ist. So kann der Übergang vom größeren Außendurchmesser des verklebten Bereiches des Inserts zur Dehnhülse mit dem kleineren Außendurchmesser eine Hinterschneidung aufweisen.

Eine vorteilhafte Anordnung der Dehnhülse im Rotorblattkörper wird in der Zeichnung dargestellt.

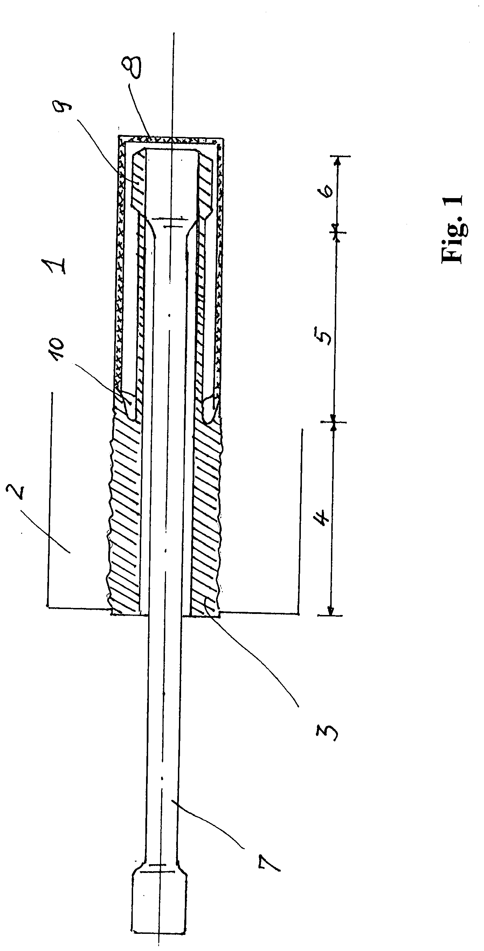

Fig. 1 zeigt eine Ausführung, bei der das Insert 3, die Dehnhülse 5 und der Innengewindeabschnitt 6 einteilig ausgeführt sind und im Blattwurzelbereich 2 des Rotorblattkörpers 1 angeordnet sind. Das Insert 3 besteht hier aus Stahl.

Die Verbindung zu einem entsprechenden Anschluss an der Rotornabe oder dem Blattlager unter Vorspannung erfolgt mittels des Bolzens 7.

In der Verbindung zwischen dem Bolzen 7 und dem verklebten Bereich 4 des Inserts 3 mit dem Rotorblattkörper 1 ist somit das Insert 3 als Dehnhülse 5 ausgebildet und weist in Richtung Blattspitze den Innengewindeabschnitt 6 zur Herstellung der Verbindung mit dem Bolzen 7 auf.

Der Bolzen 7 durchläuft dabei den Bereich 4 und die Dehnhülse 5 kontaktlos, d.h. ohne jegliche Fixierung.

Zur Vermeidung eines Kontaktes zwischen der Dehnhülse 5 sowie dem Innengewindeabschnitt 6 jeweils mit dem Rotorblattkörper 1 sind der Innengewindeabschnitt 6 und die Dehnhülse 5 außen mit einer Kappe 8 versehen. Diese ist einseitig geschlossen, so dass auch kein Harz aus dem Laminat in das Innengewinde beim Einlaminieren des Inserts 3 eindringen kann.

Der Innengewindeabschnitt 6 ist gegenüber der Dehnhülse 5 im Außendurchmesser 9 vergrößert und damit verstärkt, um eine Verformung des Innengewindes bei entsprechend hoher Belastung auszuschließen.

Außendurchmesserdifferenzen zwischen der Dehnhülse 5, dem Innengewindeabschnitt 6 und dem einlaminierten Bereich 4 lassen sich durch die Kappe 8 ausgleichen, wie in der Fig. 1 ersichtlich ist.

Der Bereich des Überganges zwischen dem verklebten Bereich 4 des Inserts 3 und der Dehnhülse 5 ist entsprechend den Anforderungen aus der Verklebung und der Festigkeit des Inserts 3 ausgebildet und weist bevorzugt eine Hinterschneidung 10 auf.

Bei dem vorgeschlagenen Rotorblattanschluss lässt sich die Dehnhülse 5 sowohl in der Länge als auch im Außendurchmesser den konkreten technischen Erfordernissen optimal anpassen.

### Bezugszeichenliste

- 1: Rotorblattkörper
- 2: Blattwurzelbereich
- 3: Insert
- 4: verklebter Insertbereich
- 5: Dehnhülse
- 6: Innengewindeabschnitt
- 7: Bolzen
- 8: Kappe
- 9: Vergrößerter Außendurchmesser
- 10: Hinterschneidung

## Patentansprüche

1. Rotorblattanschluss für einen Rotorblattkörper (1) an einer Rotornabe oder einem Blattlager einer Windkraftanlage aufweisend eine Vielzahl von Inserts (3), die in axialer Richtung zum Rotorblattkörper (1) und beabstandet zueinander im Blattwurzelbereich (2) im Rotorblattkörper (1) angeordnet sind und über die jeweils eine Verbindung zu einem entsprechenden Anschluss an der Rotornabe oder dem Blattlager unter Vorspannung mittels eines Bolzens (7) herstellbar ist, wobei in der Verbindung zwischen dem Bolzen (7) und dem verklebten Insert (3) jeweils eine Dehnhülse (5) angeordnet ist, und wobei
sich in Richtung Blattspitze an einen Bereich (4) des Inserts (3), der mit dem Rotorblattkörper (1) verklebt ist, eine Dehnhülse (5) anschließt, gefolgt von einem Innengewindeabschnitt (6) zur Herstellung der Verbindung mit dem Bolzen (7), **dadurch gekennzeichnet, dass**
zur Vermeidung eines Kontaktes zwischen der Dehnhülse (5) sowie dem Innengewindeabschnitt (6) jeweils mit dem Rotorblattkörper (1) der Innengewindeabschnitt (6) und die Dehnhülse (5) außen mit einer Kappe (8) versehen sind.

2. Rotorblattanschluss nach Anspruch 1, **dadurch gekennzeichnet, dass** die Dehnhülse (5) und der Innengewindeabschnitt (6) Bestandteil des Inserts (3) sind.

3. Rotorblattanschluss nach Anspruch 1, **dadurch gekennzeichnet, dass** das Insert (3), die Dehnhülse (5) und der Innengewindeabschnitt (6) getrennte in axialer Richtung aufeinanderliegende Bauteile sind.

4. Rotorblattanschluss nach Anspruch 1, **dadurch gekennzeichnet, dass** die Dehnhülse (5) Bestandteil des Inserts (3) ist und der Innengewindeabschnitt (6) sich in Richtung Blattspitze an die Dehnhülse (5) als gesondertes Bauteil anschließt.

5. Rotorblattanschluss nach Anspruch 1, **dadurch gekennzeichnet, dass** die Dehnhülse (5) und der Innengewindeabschnitt (6) ein Bauteil sind und sich in Richtung Blattspitze an das Inserts (3) anschließen.

6. Rotorblattanschluss nach Anspruch 1, **dadurch gekennzeichnet, dass** die Kappe (8) aus einem nachgiebigen Material bestehen

7. Rotorblattanschluss nach Anspruch 1 oder 6, **dadurch gekennzeichnet, dass** die Kappe (8) aus Kunststoff bestehen.

8. Rotorblattanschluss nach einem der vorgenannten Ansprüche, **dadurch gekennzeichnet, dass**
der Innengewindeabschnitt (6) im Außendurchmesser gegenüber dem der Dehnhülse (5) vergrößert und damit verstärkt ist.

9. Rotorblattanschluss nach einem der Ansprüche 1 bis 8, **dadurch gekennzeichnet, dass**
das Insert (3) im Bereich (4) der Verklebung mit dem Rotorblattkörper (1) außen Erhebungen und/oder Vertiefungen aufweist.

## Claims

1. A rotor blade connection for a rotor blade body (1) at a rotor hub or a blade bearing of a wind power plant, having a plurality of inserts (3) arranged in an axial direction relative in the rotor blade body (1) and spaced apart from each other in the blade root region (2) in the rotor blade body (1) and via which respectively a connection to a corresponding connection at the rotor hub or the blade bearing are creatable by tensioning by means of a bolt (7), wherein, in the linkages between the bolt (7) and the glued insert (3), an expandable sleeve (5) is arranged in each case and wherein,
in the direction of the blade tip, an expandable sleeve (5) follows a region (4) of the insert (3) which is glued to the rotor blade body (1), followed by an internal thread portion (6) for creating the linkage with the bolt (7),
**characterized in that**,
to prevent contact between the expandable sleeve (5) as well as the internal thread portion (6) and the rotor blade body (1), the internal thread portion (6) and the expandable sleeve (5) are externally provided with a cap (8).

2. The rotor blade connection according to Claim 1, **characterized in that**
the expandable sleeve (5) and the internal thread portion (6) are components of the insert (3).

3. The rotor blade connection according to Claim 1, **characterized in that**
the insert (3), the expandable sleeve (5), and the internal thread portion (6) are separate components lying on top of each other in the axial direction.

4. The rotor blade connection according to Claim 1, **characterized in that**
the expandable sleeve (5) is a component of the insert (3) and the internal thread portion (6) follows the expandable sleeve (5) as a separate component in the direction of the blade tip.

5. The rotor blade connection according to Claim 1, **characterized in that**
the expandable sleeve (5) and the internal thread portion (6) are one component and follow the insert (3) in the direction of the blade tip.

6. The rotor blade connection according to Claim 1, **characterized in that**
the cap (8) is made from a flexible material.

7. The rotor blade connection according to Claim 1 or 6, **characterized in that**
the cap (8) is made from plastics.

8. The rotor blade connection according to any one of the preceding claims, **characterized in that**
the internal thread portion (6) has an enlarged outer diameter relative to that of the expandable sleeve (5) and is thus reinforced.

9. The rotor blade connection according to any one of Claims 1 to 8, **characterized in that**
the insert (3) has external elevations and/or depressions in the region (4) of the gluing with the rotor blade body (1).

## Revendications

1. Raccord de pale de rotor pour un corps de pale de rotor (1) sur un moyeu de rotor ou un palier de pale d'une éolienne présentant une pluralité d'inserts (3) qui sont disposés dans le corps de pale de rotor (1) dans la direction axiale par rapport au corps de pale de rotor (1) et espacés les uns des autres dans la zone de l'emplanture de pale (2) et par le biais desquels une liaison peut respectivement être établie avec un raccord correspondant sur le moyeu de rotor ou le palier de pale, sous précontrainte, au moyen d'un boulon (7), une douille élastique (5) étant disposée respectivement dans la liaison entre le boulon (7) et l'insert (3) collé, et dans lequel
une douille élastique (5) se trouve dans le prolongement d'une zone (4) de l'insert (3) qui est collée au corps de pale de rotor (1) en direction de la pointe de pale, suivie d'une partie à filetage intérieur (6) destinée à établir la liaison avec le boulon (7),
**caractérisé en ce que**
pour éviter un contact entre la douille élastique (5) ainsi que la partie à filetage intérieur (6) et respectivement le corps de pale de rotor (1), la partie à filetage intérieur (6) et la douille élastique (5) sont pourvues à l'extérieur d'un capuchon (8).

2. Raccord de pale de rotor selon la revendication 1, **caractérisé en ce que** la douille élastique (5) et la partie à filetage intérieur (6) font partie de l'insert (3).

3. Raccord de pale de rotor selon la revendication 1, **caractérisé en ce que**
l'insert (3), la douille élastique (5) et la partie à filetage intérieur (6) sont des éléments séparés placés les uns sur les autres dans la direction axiale.

4. Raccord de pale de rotor selon la revendication 1, **caractérisé en ce que**
la douille élastique (5) fait partie de l'insert (3) et la partie à filetage intérieur (6) se trouve dans le prolongement de la douille élastique (5) en direction de la pointe de pale, sous la forme d'un élément séparé.

5. Raccord de pale de rotor selon la revendication 1, **caractérisé en ce que**
la douille élastique (5) et la partie à filetage intérieur (6) sont un élément et se trouvent dans le prolongement de l'insert (3) en direction de la pointe de pale.

6. Raccord de pale de rotor selon la revendication 1, **caractérisé en ce que** le capuchon (8) est constitué d'un matériau flexible.

7. Raccord de pale de rotor selon la revendication 1 ou 6, **caractérisé en ce que** le capuchon (8) est constitué de matière plastique.

8. Raccord de pale de rotor selon une des revendications précédentes, **caractérisé en ce que**
le diamètre extérieur de la partie à filetage intérieur (6) est agrandi par rapport à celui de la douille élastique (5) et est ainsi renforcé.

9. Raccord de pale de rotor selon une des revendications 1 à 8, **caractérisé en ce que** dans la zone (4) du collage avec le corps de pale de rotor (1) à l'extérieur, l'insert (3) présente des saillies et/ou des creux.
